# EUROPÄISCHE PATENTSCHRIFT

(11) **EP 2 389 491 B1**
(45) Veröffentlichungstag und Bekanntmachung des Hinweises auf die Patenterteilung: **03.05.2017**
(21) Anmeldenummer: 10701811.1
(22) Anmeldetag: 21.01.2010
(51) Int. Cl.: E05F 15/40, E05F 15/603, E05F 15/622

(54) **ANTRIEBSANORDNUNG ZUR MOTORISCHEN VERSTELLUNG EINES VERSTELLELEMENTS EINES KRAFTFAHRZEUGS**
DRIVE ARRANGEMENT FOR THE MOTORISED ADJUSTMENT OF AN ADJUSTMENT ELEMENT IN A MOTOR VEHICLE
DISPOSITIF D ENTRAÎNEMENT POUR LE RÉGLAGE MOTORISÉ D'UN ÉLÉMENT DE RÉGLAGE DANS UN VÉHICULE AUTOMOBILE

(30) Priorität: 23.01.2009 DE 202009000907 U
(43) Veröffentlichungstag der Anmeldung: 30.11.2011
(73) Patentinhaber: Brose Fahrzeugteile GmbH & Co. Kommanditgesellschaft, Bamberg, 96052 Bamberg (DE)
(72) Erfinder: SCHIEGEL, Stefan, 96231 Staffelstein (DE)
(74) Vertreter: Gottschald, Jan
(86) Internationale Anmeldenummer: PCT/EP2010/000336
(87) Internationale Veröffentlichungsnummer: WO 2010/083999

(56) Entgegenhaltungen:
- DE-A1-102007 001 068
- DE-U1-202005 007 155
- GB-A- 510 561

## Beschreibung

Die Erfindung betrifft eine Antriebsanordnung zur motorischen Verstellung eines Verstellelements in einem Kraftfahrzeug gemäß dem Oberbegriff von Anspruch 1 sowie eine Verstellelementanordnung eines Kraftfahrzeugs gemäß Anspruch 11.

Der Begriff "Verstellelement" ist vorliegend umfassend zu verstehen. Hierunter fallen Heckklappen, Heckdeckel, Motorhauben, Türen, insbesondere Seitentüren, Laderaumböden oder dergleichen eines Kraftfahrzeugs.

In erster Linie findet die in Rede stehende Antriebsanordnung allerdings Anwendung bei Heckklappen und Seitentüren in Kraftfahrzeugen. Sie dient der motorischen Verstellung des jeweiligen Verstellelements in Schließrichtung und in Öffnungsrichtung. Wichtig ist dabei regelmäßig, dass die Antriebsanordnung neben dem motorischen Verstellbetrieb auch einen manuellen Verstellbetrieb zulässt. Der manuelle Verstellbetrieb ist insbesondere im Notfall, beispielsweise im Crashfall oder bei Stromausfall, von Bedeutung.

Die bekannte Antriebsanordnung (DE 20 2005 007 155 U1), von der die Erfindung ausgeht, ist einer Heckklappe zugeordnet. Die Antriebsanordnung ist mit zwei Spindelantrieben ausgestattet, die jeweils in einer kompakten Baueinheit einen Antriebsmotor, ein Zwischengetriebe mit Kupplung und ein Spindel-Spindelmutter-Getriebe aufweisen. In der jeweiligen Baueinheit ist eine Federanordnung vorgesehen, die der Gewichtskraft der zugeordneten Heckklappe entgegenwirkt. Die bekannte Antriebsanordnung weist ferner eine Antriebssteuerung auf, die der Ansteuerung der beiden Antriebe, insbesondere der beiden Antriebsmotoren, dient. Die Antriebe sind nicht selbsthemmend ausgestaltet, so dass ein manueller Betrieb auf einfache Weise realisiert ist.

Die DE 102007001068 offenbart die Merkmale des Oberbegriffs des Anspruchs 1.

Mit der bekannten Antriebsanordnung lassen sich Heckklappen von beträchtlicher Größe und/oder beträchtlichem Gewicht motorisch verstellen. Dies eröffnet neue Freiheitsgrade bei der Auslegung solcher Heckklappen. Mit der Steige - rung des Gewichts ist grundsätzlich aber auch ein erhöhtes Risiko bei einem Ausfall von Antriebskomponenten verbunden.

Der Erfindung liegt das Problem zugrunde, die bekannte Antriebsanordnung derart auszugestalten und weiterzubilden, dass die Betriebssicherheit mit einfachen Mitteln erhöht wird.

Das obige Problem wird bei einer Antriebsanordnung gemäß dem Oberbegriff von Anspruch 1 durch die Merkmale des kennzeichnenden Teils von Anspruch 1 gelöst.

Wesentlich ist die grundsätzliche Überlegung, dass eine Einrichtung zum Überspannungsschutz, die im Folgenden lediglich als "Überspannungsschutz" bezeichnet wird, bei geeigneter Auslegung dafür genutzt werden kann, die Betriebssicherheit der in Rede stehenden Antriebsanordnung zu erhöhen.

Der obige Überspannungsschutz dient in erster Linie dem Schutz der Antriebssteuerung und des Antriebsmotors vor Spannungsspitzen in der Versorgungsspannung. Entsprechend löst der Überspannungsschutz bei Überschreiten einer an den Versorgungsanschlüssen anliegenden Grenz-Versorgungsspannung aus. Dieses Auslösen ist regelmäßig mit einem entsprechenden Schaltvorgang verbunden.

Die vorschlagsgemäße Lösung macht sich die Tatsache zunutze, dass der Antriebsmotor bei einer nicht motorischen Verstellung, insbesondere bei einer manuellen, federkraftbedingten oder schwerkraftbedingten Verstellung des Verstellelements, als Generator arbeitet und eine Generatorspannung erzeugt. Dabei ist die Anordnung so getroffen, dass der Überspannungsschutz eben auch durch eine solche nicht motorische Verstellung des Verstellelements bei Überschreiten einer Grenz-Generatorspannung auslösbar ist.

Je nach Anwendungsfall können unterschiedliche Schaltvorgänge mit dem Auslösen des Überspannungsschutzes einhergehen. Bei der bevorzugten Ausgestaltung gemäß Anspruch 3 koppelt der Überspannungsschutz im ausgelösten Zustand die Anschlüsse des Antriebsmotors elektrisch miteinander, wodurch der Antriebsmotor gebremst wird.

Insbesondere bei der letztgenannten Variante ist es vorteilhaft, dass der Überspannungsschutz nur auslöst, wenn die nicht motorische Verstellung des Verstellelements oberhalb der normalbetriebsmäßigen Verstellgeschwindigkeit erfolgt. Dies ist Gegenstand von Anspruch 4.

Bei der besonders bevorzugten Ausgestaltung gemäß Anspruch 9 ist die Antriebssteuerung mit einer H-Brückenschaltung ausgestattet, die zwei integrierte Halbbrückenmodule mit Überspannungsschutz aufweist. Vorteilhaft ist hierbei die Tatsache, dass auf eine Vielzahl unterschiedlicher Standard-Halbbrückenmodule zurückgegriffen werden kann, so dass eine auf den jeweiligen Anwendungsfall, insbesondere auf die jeweilige normalbetriebsgemäße Verstellgeschwindigkeit, angepasste Auslegung der Antriebssteuerung möglich ist.

Nach einer weiteren Lehre, der ebenfalls eigenständige Bedeutung zukommt, wird das obige Problem bei einer Verstellelementanordnung gemäß Anspruch 11 gelöst.

Die vorschlagsgemäße Verstellelementanordnung ist mit einem Verstellelement, insbesondere einer Heckklappe, eines Kraftfahrzeugs und mit einer vorschlagsgemäßen Antriebsanordnung zur motorischen Verstellung des Verstellelements ausgestattet. Zur Erläuterung dieser weiteren Lehre darf auf alle, die Antriebsanordnung betreffenden Ausführungen verwiesen werden.

Im Folgenden wird die Erfindung anhand einer lediglich ein Ausführungsbeispiel darstellenden Zeichnung näher erläutert. In der Zeichnung zeigt
- Fig. 1: das Heck eines Kraftfahrzeugs in einer Seitenansicht mit einer Heckklappe und einer vorschlagsgemäßen Antriebsanordnung zur motorischen Verstellung der Heckklappe,
- Fig. 2: einen der beiden Antriebe der Antriebsanordnung gemäß Fig. 1 in einer Schnittdarstellung,
- Fig. 3: die H-Brückenschaltung der Antriebssteuerung für den Antrieb gemäß Fig. 2 in einer ganz schematischen Darstellung,
- Fig. 4: ein Halbbrückenmodul der H-Brückenschaltung gemäß Fig. 3 als Blockschaltbild.

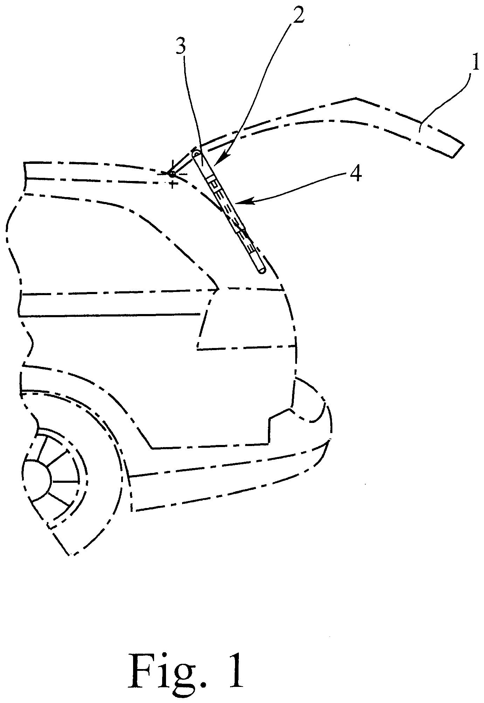

Die in Fig. 1 dargestellte Antriebsanordnung dient der motorischen Verstellung einer Heckklappe 1 in einem Kraftfahrzeug. Es sind aber auch alle anderen im einleitenden Teil der Beschreibung angesprochenen Verstellelemente vorteilhaft anwendbar. Alle folgenden Ausführungen zu einer Heckklappe gelten entsprechend gleichermaßen für alle anderen dort angesprochenen Verstellelemente.

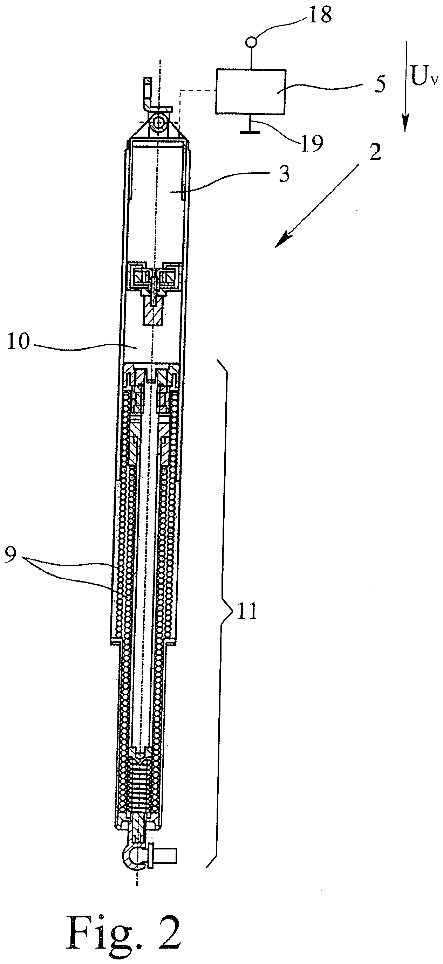

Der in Fig. 1 dargestellten Antriebsanordnung sind zwei identische Antriebe 2, die jeweils einen Antriebsmotor 3 aufweisen, zugeordnet. Die Antriebe 2 sind in den beiden seitlichen Bereichen einer Heckklappenöffnung 4 angeordnet. In Fig. 1 ist nur einer der beiden Antriebe 2 dargestellt. Fig. 2 zeigt diesen Antrieb 2 in einer Schnittansicht.

Die folgenden Ausführungen betreffen nur den einen in Fig. 1 erkennbaren Antrieb 2. Sie gelten aber gleichermaßen für gegebenenfalls weitere vorhandene Antriebe.

Bei dem Antriebsmotor 3 handelt es sich vorzugsweise um einen Gleichstrommotor. Denkbar ist aber auch, dass hier ein Wechselstrommotor Anwendung findet.

Die Antriebsanordnung ist ferner mit einer dem Antrieb 2 zugeordneten und in üblicher Weise an eine Versorgungsspannung Uᵥ angeschlossenen Antriebssteuerung 5 ausgestattet. Hier und vorzugsweise ist die Antriebssteuerung 5 beiden Antrieben 2 zugeordnet. Denkbar ist aber auch, dass jedem Antrieb 2 eine eigene Antriebssteuerung 5 zugeordnet ist.

Die vorschlagsgemäße Antriebsanordnung erlaubt ohne größeren konstruktiven Aufwand eine manuelle Verstellung der Heckklappe 1, da der Antrieb 2 nicht selbsthemmend ausgestaltet ist. Dies bedeutet, dass bei einer nicht motorischen, also manuellen federkraft- oder schwerkraftbedingten Verstellung der Heckklappe 1 der Antriebsmotor 3 mitdreht und als Generator arbeitet. Dabei erzeugt der Antriebsmotor 3 eine entsprechende Generatorspannung U_{G}.

Wesentlich ist zunächst, dass die Antriebssteuerung mit einem Überspannungsschutz 6 ausgestattet ist, der durch das Überschreiten einer Grenz-Versorgungsspannung Uᵥ auslösbar ist. Die Realisierung eines solchen Überspannungsschutzes 6 ist an sich bekannt.

Vorschlagsgemäß ist die Anordnung aber zusätzlich so getroffen, dass der Überspannungsschutz 6 außerdem durch Überschreiten einer Grenz-Generatorspannung U_{G} auslösbar ist. Die Bedeutung der Grenz-Generatorspannung U_{G} wird weiter unten noch erläutert.

Zunächst bewirkt das Auslösen des Überspannungsschutzes 6 die schaltungstechnische Unterbrechung der über den Antriebsmotor 3 führenden Antriebs-Strompfade, um den Antriebsmotor 3 und insbesondere noch zu erläuternde Schaltelemente vor einer gegebenenfalls überhöhten Versorgungsspannung Uᵥ zu schützen. Die Antriebs-Strompfade sind die Strompfade, über die dem Antriebsmotor 3 Antriebsleistung zugeführt wird. Die schaltungstechnische Unterbrechung der Antriebs-Strompfade erfolgt hier über noch zu erläuternde Halbleiter-Schaltelemente, kann aber auch über Relais oder dergleichen vorgesehen sein.

Interessant ist allerdings die Tatsache, dass weiter vorzugsweise der Überspannungsschutz 6 im ausgelösten Zustand die Anschlüsse 7, 8 des Antriebsmotors 3 elektrisch miteinander koppelt, hier sogar kurzschließt, und damit den Antriebsmotor 3 bremst.

Besondere Bedeutung kommt vorliegend der Auslegung der Antriebsanordnung, insbesondere des Überspannungsschutzes 6 zu. Vorteilhafterweise löst der Überspannungsschutz 6 durch eine nicht motorische Verstellung der Heckklappe 1 nämlich genau dann aus, wenn die Verstellgeschwindigkeit die normalbetriebsmäßige Verstellgeschwindigkeit übersteigt. Hier und vorzugsweise schliesst der Überspannungsschutz 6 die Anschlüsse 7, 8 des Antriebsmotors 3 kurz und gewährleistet so die Notbremsung des Antriebsmotors 3. Denkbar ist aber auch, dass der Überspannungsschutz 6 im ausgelösten Zustand nur ein Notsignal abgibt, dass ggf. zu einem Gegenbestromen 6, dgl, des Antriebsmotors führt.

Das Übersteigen der Verstellgeschwindigkeit über die normalbetriebsmäßige Verstellgeschwindigkeit hinaus tritt beispielsweise dann auf, wenn eine dem Antrieb 2 zugeordnete Federanordnung 9 bricht, die im Normalbetrieb das Halten der Heckklappe 1 gewährleisten würde. Eine solche Federanordnung 9 ist bei dem in Fig. 2 dargestellten Antrieb 2 vorgesehen. Sie wirkt der Gewichtskraft der Heckklappe 1 entgegen.

Der in Fig. 2 dargestellte Antrieb 2 ist als Spindelantrieb mit Antriebsmotor 3, Zwischengetriebe 10 und Spindel-Spindelmuttergetriebe 11 ausgestattet, wobei die Federanordnung 9 dafür sorgt, dass das Spindel-Spindelmuttergetriebe 11 in die ausgefahrene Stellung vorgespannt ist. Den Einbauzustand des Spindelantriebs zeigt Fig. 1.

Die Antriebssteuerung 5, die in Fig. 2 nur angedeutet ist, weist eine H-Brückenschaltung 12 mit zwei Low-Side-Schaltern 13, 14 und zwei High-Side-Schaltern 15, 16 zur Ansteuerung des Antriebsmotors 3 auf. Die H-Brückenschaltung 12 ist in üblicher Weise mit zwei Halbbrücken 12a, 12b aufgebaut, die jeweils einen der Low-Side-Schalter 13, 14 und einen der High-Side-Schalter 15, 16 aufweisen. Der Low-Side-Schalter 13, 14 und der High-Side-Schalter 15, 16 einer Halbbrücke 12a, 12b sind hinsichtlich ihrer Schaltausgänge in Reihe geschaltet. Die Anschlüsse 7, 8 des Antriebsmotors 3 sind mit den Kontaktstellen der jeweils in Reihe geschalteten Schalterpaare 13, 15; 14, 16 verbunden.

Hier und vorzugsweise ist es so, dass der Überspannungsschutz 6 im ausgelösten Zustand die beiden High-Side-Schalter 15, 16 durchschaltet und die beiden Low-Side-Schalter 13, 14 sperrt. Denkbar ist allerdings auch, dass umgekehrt im ausgelösten Zustand des Überspannungsschutzes 6 die beiden Low-Side-Schalter 13, 14 durchgeschaltet und die beiden High-Side-Schalter 15, 16 gesperrt sind.

In beiden oben genannten Fällen ist der Antriebsmotor 3 kurzgeschlossen und befindet sich im Bremsbetrieb.

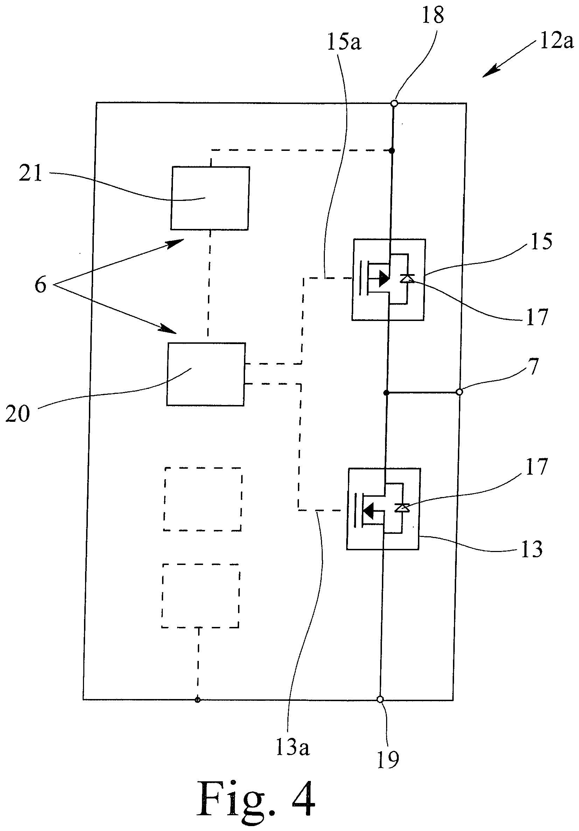

Es sind eine Reihe vorteilhafter Varianten für die Realisierung der Low-Side-Schalter 13, 14 und der High-Side-Schalter 15, 16 denkbar. Hier und vorzugsweise sind diese Schalter 13, 14, 15, 16 als MOSFETs ausgestaltet, wobei es sich hier bei den Low-Side-Schaltern 13, 14 um N-Kanal-MOSFETs und bei den High-Side-Schaltern 15, 16 um P-Kanal-MOSFETs handelt. Die Gate-Anschlüsse 13a, 14a, 15a, 16a der Schalter 13, 14, 15, 16 sind mit einer Logikeinheit 20 gekoppelt, die nur in der noch zu erläuternden Fig. 4 dargestellt ist.

Die Anordnung ist nun so getroffen, dass die Generatorspannung U_{G} über die Body-Dioden 17 eines High-Side-Schalters 15, 16 der einen Halbbrücke 12a, 12b und eines Low-Side-Schalters 13, 14 der anderen Halbbrücke 12a, 12b der H-Brückenschaltung 12 zumindest zum Teil zu den Versorgungsanschlüssen 18, 19 der H-Brückenschaltung 12 durchgeschaltet wird.

Die Existenz der Body-Dioden 17 ist MOSFET-Schaltelementen immanent. Zur Veranschaulichung sind die Body-Dioden 17 in der noch zu erläuternden Fig. 4 als diskrete Bauelemente dargestellt.

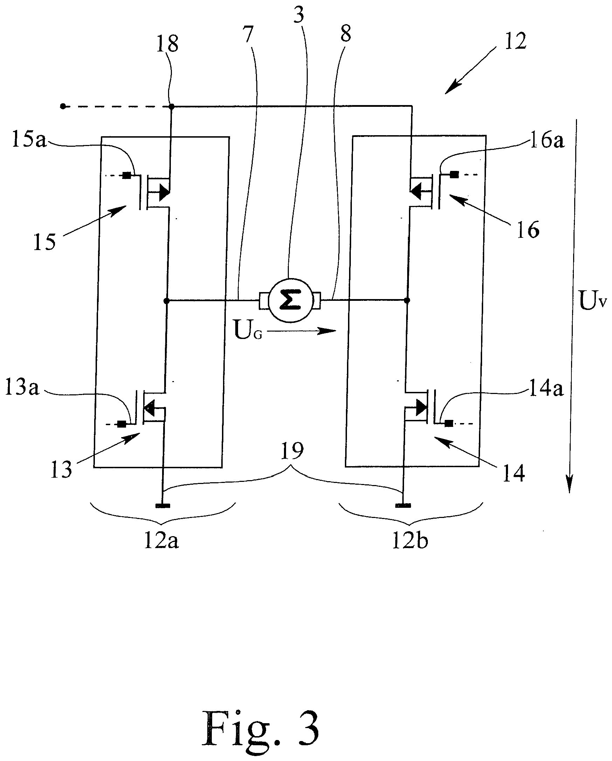

Es ergibt sich aus der Darstellung in Fig. 3, dass der zu den Versorgungsanschlüssen 18, 19 der H-Brückenschaltung 12 durchgeschaltete Teil der Generatorspannung U_{G} bei Überschreiten einer Grenz-Generatorspannung zum Auslösen des Überspannungsschutzes 6 führen kann, da dies bei entsprechender Auslegung dem Überschreiten der Grenz-Versorgungsspannung Uᵥ entspricht. Hier wird deutlich, dass es auf die richtige Auslegung der Grenz-Generatorspannung U_{G} ankommt, um sicherstellen zu können, dass der Überspannungsschutz 6 nur dann ausgelöst wird, wenn bei der nicht motorischen Verstellung der Heckklappe 1 die Verstellgeschwindigkeit oberhalb der normalbetriebsmäßigen Verstellgeschwindigkeit liegt.

Eine kostengünstige Realisierung der vorschlagsgemäßen Antriebssteuerung 5 mit Standardbauteilen ergibt sich dadurch, dass die beiden Halbbrücken 12a, 12b der H-Brückenschaltung 12 jeweils als integriertes Halbbrückenmodul ausgestaltet sind und dass beide Halbbrückenmodule jeweils mit einem separaten Überspannungsschutz 6 ausgestattet sind. Mit "integriert" ist hier gemeint, dass es sich bei den Halbbrückenmodulen um integrierte Schaltkreise handelt. Den grundsätzlichen Aufbau eines solchen Halbbrückenmoduls zeigt Fig. 4.

Das in Fig. 4 dargestellte Halbbrückenmodul ist mit einer Logikeinheit 20 zur Ansteuerung des Low-Side-Schalters 13 und des High-Side-Schalters 15 ausgestattet. Dabei weist der Überspannungsschutz 6 der beiden Halbbrückenmodule 12a, 12b jeweils eine mit der Logikeinheit 20 verbundene Detektionseinheit 21 zur Detektion des Überschreitens der Versorgungsspannung Uᵥ über die Grenz-Versorgungsspannung auf.

Interessant ist bei dem dargestellten und insoweit bevorzugten Ausführungsbeispiel noch ein schaltungstechnischer Aspekt. Dort ist es nämlich vorgesehen, dass der Antriebsmotor 3 permanent mit den beiden Halbbrücken 12a, 12b verbunden ist. Eine irgendwie geartete Trennbarkeit des Antriebsmotors 3 von den Halbbrücken 12a, 12b ist nicht vorgesehen. Dies ergibt sich aus dem vorschlagsgemäßen Konzept, nach dem die Generatorspannung U_{G} wie erläutert auch bei nicht motorischer Verstellung der Heckklappe 1 zu den Versorgungsanschlüssen 18, 19 weitergeleitet wird.

Es wurde schon darauf hingewiesen, dass bei der Erfindung zwei Antriebe 2 vorgesehen sind. Die Antriebssteuerung 5 weist zur Ansteuerung der Antriebsmotoren 3 der beiden Antriebe 2 jeweils eine H-Brückenschaltung 12 mit Überspannungsschutz 6 auf, wobei die jeweils korrespondierenden Versorgungsanschlüsse 18, 19 der H-Brückenschaltungen 12 zusammengeschaltet sind. Mit "korrespondierend" ist gemeint, dass die Anschlüsse 18 für das Versorgungspotential und die Anschlüsse 19 für das Massepotential jeweils zusammengeschaltet sind.

Der Vorteil für das oben beschriebene Zusammenschalten der korrespondierenden Versorgungsanschlüsse 18, 19 der H-Brückenschaltungen 12 besteht darin, dass die Generatorspannung U_{G} nur einer der Antriebsmotoren 3 ausreicht, um den Überspannungsschutz 6 beider H-Brückenschaltungen 2 auszulösen. Damit lässt sich eine sichere und vor allem schnelle Bremsung der Heckklappe 1 realisieren.

Die beiden H-Brückenschaltungen 12 sind vorzugsweise, wie weiter oben angesprochen, jeweils aus zwei Halbbrückenmodulen mit Überspannungsschutz zusammengeschaltet.

Die vorschlagsgemäße Lösung lässt sich auf alle möglichen Verstellelemente 1 eines Kraftfahrzeugs anwenden. Vorzugsweise handelt es sich bei dem Verstellelement 1 um eine Heckklappe, einen Heckdeckel, eine Motorhaube, eine Tür, insbesondere Seitentür, oder um einen Laderaumboden eines Kraftfahrzeugs.

Nach einer weiteren Lehre, der ebenfalls eigenständige Bedeutung zukommt, wird eine Verstellelementanordnung eines Kraftfahrzeugs mit einem Verstellelement 1, insbesondere einer Heckklappe 1, und mit einer oben beschriebenen, vorschlagsgemäßen Antriebsanordnung zur motorischen Verstellung des Verstellelements 1 beansprucht. Auf die obigen Ausführungen zu der vorschlagsgemäßen Antriebsanordnung darf in vollem Umfange verwiesen werden.

In besonders bevorzugter Ausgestaltung ist die Anordnung wie oben schon angesprochen so getroffen, dass der Überspannungsschutz 6 nur auslöst, wenn die nicht motorische Verstellung des Verstellelements 1 oberhalb der normalbetriebsmäßigen Verstellgeschwindigkeit erfolgt.

Weiter vorzugsweise ist das Verstellelement 1 durch Gewichts- und/oder Federkraft selbsttätig verstellbar, wobei die Anordnung so getroffen ist, dass durch die selbsttätige Verstellung und durch die dabei vom Antriebsmotor 3 erzeugte Generatorspannung U_{G} der Überspannungsschutz 6 auslösbar ist. Dies bedeutet, dass die Grenz-Generatorspannung U_{G} gerade so gewählt ist, dass die Grenz-Generatorspannung U_{G} bei einer selbsttätigen Verstellung des Verstellelements 1, beispielsweise beim Zufallen des Verstellelements 1, insbesondere der Heckklappe 1, aufheben kann.

Mit den beiden oben erläuterten, eigenständigen Lehren wird eine manuelle und/oder selbsttätige Verstellung des Verstellelements 1 mit übermäßiger Geschwindigkeit auf denkbar einfache Weise gebremst. Der schaltungstechnische und softwaretechnische Aufwand ist durch die obige Doppelnutzung des Überspannungsschutzes 6 minimal. Hervorzuheben ist dabei die Tatsache, dass der vorschlagsgemäße Bremsbetrieb auch bei unversorgter oder inaktiver Antriebssteuerung 5 voll funktionsfähig ist.

## Patentansprüche

1. Antriebsanordnung zur motorischen Verstellung eines Verstellelements (1) eines Kraftfahrzeugs, wobei mindestens ein Antrieb (2) mit einem elektrischen Antriebsmotor (3), insbesondere Gleichstrommotor, und eine dem Antrieb (2) zugeordnete und an eine Versorgungsspannung Uᵥ angeschlossene Antriebssteuerung (5) vorgesehen sind, wobei der Antrieb (2) nicht selbsthemmend ausgestaltet ist, so dass bei einer nicht motorischen Verstellung des Verstellelements (1) der Antriebsmotor (3) als Generator arbeitet und eine Generatorspannung U_{G} erzeugt, wobei zwei dieser Antriebe (2) vorgesehen sind,
**dadurch gekennzeichnet,**
**dass** die Antriebssteuerung (5) mit einem Überspannungsschutz (6) ausgestattet ist, der durch das Überschreiten einer Grenz-Versorgungsspannung Uᵥ auslösbar ist und dass die Anordnung ferner so getroffen ist, dass der Überspannungsschutz (6) außerdem durch eine nicht motorische Verstellung des Verstellelements (1) bei Überschreiten einer Grenz-Generatorspannung U_{G} auslösbar ist, dass die Antriebssteuerung (5) zur Ansteuerung der Antriebsmotoren (3) der Antriebe (2) jeweils eine H-Brückenschaltung (12) mit Überspannungsschutz (6) aufweist und dass die jeweils korrespondierenden Versorgungsanschlüsse (18, 19) der H-Brückenschaltungen (12) zusammengeschaltet sind.

2. Antriebsanordnung nach Anspruch 1, **dadurch gekennzeichnet, dass** der Überspannungsschutz (6) im ausgelösten Zustand die über den Antriebsmotor (3) führenden Antriebs-Strompfade schaltungstechnisch unterbricht.

3. Antriebsanordnung nach Anspruch 1 oder 2, **dadurch gekennzeichnet, dass** der Überspannungsschutz (6) im ausgelösten Zustand die Anschlüsse (7, 8) des Antriebsmotors (3) elektrisch miteinander koppelt, insbesondere kurzschließt, und damit den Antriebsmotor (3) bremst.

4. Antriebsanordnung nach einem der vorhergehenden Ansprüche, **dadurch gekennzeichnet, dass** die Anordnung so getroffen ist, dass der Überspannungsschutz (6) durch eine nicht motorische Verstellung des Verstellelements (1) nur auslösbar ist, sofern die Verstellgeschwindigkeit oberhalb der normalbetriebsmäßigen Verstellgeschwindigkeit liegt.

5. Antriebsanordnung nach einem der vorhergehenden Ansprüche, **dadurch gekennzeichnet, dass** die Antriebssteuerung (5) eine H-Brückenschaltung (12) mit zwei Low-Side-Schaltern (13, 14) und zwei High-Side-Schaltern (15, 16) zur Ansteuerung des Antriebsmotors (3) aufweist, vorzugsweise, dass die H-Brückenschaltung (12) zwei Halbbrücken (12a, 12b) aufweist, die jeweils einen der Low-Side-Schalter (13, 14) und einen der High-Side-Schalter (15, 16) aufweisen.

6. Antriebsanordnung nach Anspruch 5, **dadurch gekennzeichnet, dass** der Überspannungsschutz (6) im ausgelösten Zustand die beiden High-Side-Schalter (15, 16) durchschaltet und die beiden Low-Side-Schalter (13, 14) sperrt, oder, dass der Überspannungsschutz (6) im ausgelösten Zustand die beiden Low-Side-Schalter (13, 14) durchschaltet und die beiden High-Side-Schalter (15, 16) sperrt.

7. Antriebsanordnung nach einem der Ansprüche 5-6, **dadurch gekennzeichnet, dass** die Low-Side-Schalter (13, 14) und die High-Side-Schalter (15, 16) als MOSFETs ausgestaltet sind und dass die Anordnung so getroffen ist, dass die Generatorspannung U_{G} über die Body-Dioden (17) eines High-Side-Schalters (15, 16) der einen Halbbrücke (12a, 12b) und eines Low-Side-Schalters (13, 14) der anderen Halbbrücke (12a, 12b) der H-Brückenschaltung (12) zumindest zum Teil zu den Versorgungsanschlüssen (18, 19) der H-Brückenschaltung (12) durchgeschaltet wird.

8. Antriebsanordnung nach einem der vorhergehenden Ansprüche, **dadurch gekennzeichnet, dass** der zu den Versorgungsanschlüssen (18, 19) durchgeschaltete Teil der Generatorspannung U_{G} bei Überschreiten einer Grenz-Generatorspannung U_{G} zum Auslösen des Überspannungsschutzes (6) führt.

9. Antriebsanordnung nach Anspruch 5 und ggf. nach einem der Ansprüche 6 bis 8, **dadurch gekennzeichnet, dass** die beiden Halbbrücken (12a, 12b) der H-Brückenschaltung (12) jeweils als integriertes Halbbrückenmodul ausgestaltet sind und dass beide Halbbrückenmodule jeweils mit einem separaten Überspannungsschutz (6) ausgestattet sind, vorzugsweise, dass die beiden Halbbrückenmodule jeweils eine Logikeinheit (20) zur Ansteuerung des Low-Side-Schalters (13) und des High-Side-Schalters (15) aufweisen, weiter vorzugsweise, dass der Überspannungsschutz (6) der beiden Halbbrückenmodule jeweils eine mit der Logikeinheit (20) verbundene Detektionseinheit (21) zur Detektion des Überschreitens der Versorgungsspannung Uᵥ über die Grenz-Versorgungsspannung aufweist.

10. Antriebsanordnung nach einem der vorhergehenden Ansprüche, **dadurch gekennzeichnet, dass** das Verstellelement (1) als Heckklappe, als Heckdeckel, als Motorhaube, als Tür, insbesondere Seitentür, oder als Laderaumboden des Kraftfahrzeugs ausgestaltet ist.

11. Verstellelementanordnung eines Kraftfahrzeugs mit einem Verstellelement (1), insbesondere einer Heckklappe (1) und mit einer Antriebsanordnung zur motorischen. Verstellung des Verstellelements (1) nach einem der vorhergehenden Ansprüche.

12. Verstellelementanordnung nach Anspruch 11, **dadurch gekennzeichnet, dass** die Anordnung so getroffen ist, dass der Überspannungsschutz (6) durch eine nicht motorische Verstellung des Verstellelements (1) nur auslösbar ist, sofern die Verstellgeschwindigkeit oberhalb der normalbetriebsmäßigen Verstellgeschwindigkeit liegt.

13. Verstellelementanordnung nach Anspruch 11 oder 12, **dadurch gekennzeichnet, dass** das Verstellelement (1) durch Gewichts- und/oder Federkraft selbsttätig verstellbar ist und dass die Anordnung so getroffen ist, dass durch die selbsttätige Verstellung und durch die dabei vom Antriebsmotor (3) erzeugte Generatorspannung U_{G} der Überspannungsschutz (6) auslösbar ist.

## Claims

1. Drive configuration for the motorized displacement of a displacement element (1) of a motor vehicle, at least one drive (2) having an electrical drive motor (3), in particular a DC motor, and a drive controller (5), which is associated with the drive (2) and connected to a supply voltage Uᵥ, being provided, the drive (2) not being designed as self-locking, so that in the case of a non-motorized displacement of the displacement element (1), the drive motor (3) operates as a generator and generates a generator voltage U_{G}, two of said drives (2) being provided,
**characterized in that** the drive controller (5) is equipped with an overvoltage protector (6), which can be triggered by exceeding a limiting supply voltage Uᵥ, and **in that** the configuration is further made so that the overvoltage protector (6) can additionally be triggered by a non-motorised displacement of the displacement element (1) if a limiting generator voltage U_{G} is exceeded, **in that** the drive controller (5) for activating the drive motors (3) of the drives (2) has an H-bridge circuit (12) with overvoltage protector (6) in each case, and **in that** the respective corresponding supply terminals (18, 19) of the H-bridge circuits (12) are interconnected.

2. Drive configuration according to claim 1, **characterized in that** the overvoltage protector (6) interrupts the drive current paths leading via the drive motor (3) via circuitry in the triggered state.

3. Drive configuration according to Claim 1 or 2, **characterized in that** the overvoltage protector (6) electrically couples the terminals (7, 8) of the drive motor (3) to one another, in particular short-circuits them, in the triggered state, and thus brakes the drive motor (3).

4. Drive configuration according to one of the preceding claims, **characterized in that** the configuration is made so that the overvoltage protector (6) can only be triggered by a non-motorized displacement of the displacement element (1) if the displacement speed is above the normal operational displacement speed.

5. Drive configuration according to one of the preceding claims, **characterized in that** the drive controller (5) has an H-bridge circuit (12) having two low-side switches (13, 14) and two high-side switches (15, 16) for activating the drive motor (3), and **in that** the H-bridge circuit (12) preferably has two half-bridges (12a, 12b), each of which has one of the low-side switches (13, 14) and one of the high-side switches (15, 16).

6. Drive configuration according to Claim 5, **characterized in that** the overvoltage protector (6) switches through the two high-side switches (15, 16) and blocks the two low-side switches (13, 14) in the triggered state, or **in that** the overvoltage protector (6) switches through the two low-side switches (13, 14) and blocks the two high-side switches (15, 16) in the triggered state.

7. Drive configuration according to one of Claims 5-6, **characterized in that** the low-side switches (13, 14) and the high-side switches (15, 16) are designed as MOSFETs, and **in that** the configuration is made so that the generator voltage U_{G} via the body diodes (17) of one high-side switch (15, 16) of one half-bridge (12a, 12b) and one low-side switch (13, 14) of the other half-bridge (12a, 12b) of the H-bridge circuit (12) is at least partially switched through to the supply terminals (18, 19) of the H-bridge circuit (12).

8. Drive configuration according to one of the preceding claims, **characterized in that** the part of the generator voltage U_{G} switched through to the supply terminals (18, 19) results in triggering of the overvoltage protector (6) if it exceeds a limiting generator voltage U_{G}.

9. Drive configuration according to Claim 5 and optionally according to one of Claims 6 to 8, **characterized in that** the two half-bridges (12a, 12b) of the H-bridge circuit (12) are each designed as an integrated half-bridge module, and **in that** both half-bridge modules are each preferably equipped with a separate overvoltage protector (6), and **in that** preferably the two half-bridge modules each have one logic unit (20) for activating the low-side switch (13) and the high-side switch (15), and **in that** furthermore, the overvoltage protector (6) of the two half-bridge modules preferably has a detection unit (21) in each case, which is connected to the logic unit (20), for detecting if the supply voltage Uᵥ exceeds the limiting supply voltage.

10. Drive configuration according to one of the preceding claims, **characterized in that** the displacement element (1) is designed as a hatchback, a trunk lid, an engine hood, a door, in particular a side door, or as a cargo space floor of the motor vehicle.

11. Displacement element configuration of a motor vehicle having a displacement element (1), in particular a hatchback (1), and having a drive configuration for the motorized displacement of the displacement element (1) according to one of the preceding claims.

12. Displacement element configuration according to Claim 11, **characterized in that** the configuration is made so that the overvoltage protector (6) can only be triggered by a non-motorized displacement of the displacement element (1) if the displacement speed is above the normal operational displacement speed.

13. Displacement element configuration according to Claim 11 or 12, **characterized in that** the displacement element (1) is automatically displaceable by weight and/or spring force, and **in that** the configuration is made so that the overvoltage protector (6) can be triggered by the automatic displacement and by the generator voltage U_{G} which is generated by the drive motor (3) in this case.

## Revendications

1. Ensemble d'entraînement pour déplacer à l'aide d'un moteur un élément de déplacement (1) d'un véhicule automobile,
au moins un entraînement (2) présentant un moteur électrique d'entraînement (3) et en particulier un moteur à courant continu et une commande d'entraînement (5) associée à l'entraînement (2) et raccordée à une tension d'alimentation Uᵥ étant prévus,
l'entraînement (2) n'étant pas auto-freinant de telle sorte que le moteur d'entraînement (3) travaille comme générateur et produit une tension de générateur du lors d'un déplacement de l'élément de déplacement (1) sans moteur, deux de ces entraînements (2) étant prévus,
**caractérisé en ce que**
la commande d'entraînement (5) est dotée d'une protection (6) contre les surtensions qui peut être déclenchée par le dépassement d'une tension d'alimentation limite Uᵥ et
**en ce que** l'agencement est conçu de telle sorte que la protection (6) contre les surtensions puisse être de plus déclenchée par un déplacement de l'élément de déplacement (1) sans l'aide d'un moteur lors d'un dépassement d'une tension limite de générateur U_{G},
**en ce que** pour la commande de chacun des moteurs d'entraînement (3) des entraînements (2), la commande d'entraînement (5) présente un circuit (12) à pont en H doté d'une protection (6) contre les surtensions et
**en ce que** les bornes d'alimentation correspondantes (18, 19) des circuits (12) en pont en H sont raccordées ensemble.

2. Ensemble d'entraînement selon la revendication 1, **caractérisé en ce que** lorsque la protection (6) contre les surtensions est déclenchée, elle interrompt le circuit du parcours de courant d'entraînement qui passe par le moteur d'entraînement (3).

3. Ensemble d'entraînement selon les revendications 1 ou 2, **caractérisé en ce que** lorsqu'elle déclenchée, la protection (6) contre les sur-courants raccorde électriquement l'une à l'autre et en particulier met en court-circuit les bornes (7, 8) de raccordement du moteur d'entraînement (3) et freine ainsi le moteur d'entraînement (3).

4. Ensemble d'entraînement selon l'une des revendications précédentes, **caractérisé en ce que** l'agencement est conçu de telle sorte que la protection (6) contre les surtensions ne peut être déclenchée par un déplacement de l'élément de déplacement (1) sans l'aide d'un moteur que si la vitesse de déplacement est située au-dessus de la vitesse de déplacement en fonctionnement normal.

5. Ensemble d'entraînement selon l'une des revendications précédentes, **caractérisé en ce que** la commande (5) de l'entraînement présente un circuit (12) de pont en H présentant deux commutateurs (13, 14) du côté bas et deux commutateurs (15, 16) du côté haut qui commandent le moteur d'entraînement (3) et de préférence **en ce que** le circuit (12) à pont en H présente deux demis-ponts (12a, 12b) qui présentent chacun l'un des commutateurs (13, 14) du côté bas et l'un des commutateurs (15, 16) du côté haut.

6. Ensemble d'entraînement selon la revendication 5, **caractérisé en ce que** lorsqu'elle est déclenchée, la protection (6) contre les surtensions raccorde les deux commutateurs (15, 16) du côté haut et bloque les deux commutateurs (13, 14) du côté bas ou **en ce que** lorsqu'elle est déclenchée, la protection (6) contre les surtensions raccorde les deux commutateurs (13, 14) du côté bas et bloque les deux commutateurs (15, 16) du côté haut.

7. Ensemble d'entraînement selon l'une des revendications 5 et 6, **caractérisé en ce que** les commutateurs (13, 14) du côté bas et les commutateurs (15, 16) du côté haut sont configurés comme MOSFET et **en ce que** l'agencement est conçu de telle sorte que la tension du générateur U_{G} est raccordée au moins en partie aux bornes d'alimentation (18, 19) du circuit (12) de pont en H par l'intermédiaire des diodes de corps (17) d'un commutateur (15, 16) du côté haut de l'un des demi-ponts (12a, 12b) et de l'un des commutateurs (13, 14) du côté bas de l'autre demi-pont (12a, 12b) du circuit (12) de pont en H.

8. Ensemble d'entraînement selon l'une des revendications précédentes, **caractérisé en ce que** la partie de la tension de générateur U_{G} raccordée aux bornes d'alimentation (18, 19) conduit au déclenchement de la protection (6) contre les surtensions lorsqu'une tension limite U_{G} de générateur est dépassée.

9. Ensemble d'entraînement selon la revendication 5 et éventuellement selon l'une des revendications 6 à 8, **caractérisé en ce que** les deux demi-ponts (12a, 12b) du circuit (12) de pont en H sont configurés tous deux comme modules intégrés de demi-pont et **en ce que** les deux modules de demi-pont sont tous deux équipés d'une protection séparée (6) contre les surtensions, et de préférence **en ce que** les deux modules de demi-point présentent tous deux une unité logique (20) qui commande le commutateur (13) du côté bas et le commutateur (15) du côté haut, et de façon encore plus préférable **en ce que** la protection (6) contre les surtensions des deux modules de demi-pont présentent toutes deux une unité de détection (21) raccordée à l'unité logique (20) et permettant de détecter que la tension d'alimentation Uᵥ est passée au-dessus de la tension limite d'alimentation.

10. Ensemble d'entraînement selon l'une des revendications précédentes, **caractérisé en ce que** l'élément de déplacement (1) est configuré comme hayon arrière, capot de coffre, capot de moteur, porte, en particulier porte latérale, ou comme plancher de coffre du véhicule automobile.

11. Ensemble d'élément de déplacement pour un véhicule automobile présentant un élément de déplacement (1), en particulier un hayon arrière (1), et présentant un ensemble d'entraînement pour le déplacement de l'élément de déplacement (1) à l'aide d'un moteur selon l'une des revendications précédentes.

12. Ensemble d'élément de déplacement selon la revendication 11, **caractérisé en ce que** l'agencement est conçu de telle sorte que la tension (6) contre les surtensions ne peut être déclenchée que par un déplacement de l'élément de déplacement (1) à l'aide d'un moteur pour autant que la vitesse de déplacement soit située au-dessus de la vitesse de déplacement en fonctionnement normal.

13. Ensemble d'élément de déplacement selon les revendications 11 ou 12, **caractérisé en ce que** l'élément de déplacement (1) peut être déplacé automatiquement par la force de son poids et/ou une force élastique et **en ce que** l'agencement est conçu de telle sorte que la protection (6) contre les surtensions puisse être déclenchée par le déplacement automatique et par la tension de générateur U_{G} ainsi produite par le moteur d'entraînement (3).
